# EUROPEAN PATENT APPLICATION

(11) **EP 4 507 074 A1**
(43) Date of publication of application: **12.02.2025**
(21) Application number: 22959186.2
(22) Date of filing: 23.09.2022
(51) Int. Cl.: H01M 50/10, H01M 10/04

(54) **HEATING CURING DEVICE AND HEATING CURING METHOD**

(71) Applicant: Contemporary Amperex Technology Co., Limited, Ningde, Fujian 352100 (CN)
(72) Inventor: LIN, Xiujie, Ningde, Fujian 352100 (CN)
(74) Representative: Frick, Robert
(86) International application number: PCT/CN2022/120753
(87) International publication number: WO 2024/060179

(57) **Abstract**

Provided are a heating and curing device and a heating and curing method. The heating and curing device includes a heating assembly and a tray assembly. The heating assembly includes a support frame and a heat generating plate disposed at the support frame. The tray assembly includes a tray, a first positioning member, and a second positioning member. The tray is configured to carry a battery module and a water cooling plate to be mounted at the battery module. The first positioning member and the second positioning member are both disposed at the tray. The first positioning member is configured to position the water cooling plate, and the second positioning member is configured to position the battery module. The battery module and the water cooling plate are transferred together to the heating assembly through the tray assembly. In a state where the battery module and the water cooling plate are positioned by the tray assembly, the water cooling plate is heated by the heating assembly to facilitate curing of the adhesive. Therefore, an assembly between the water cooling plate and the battery module can be realized. Since positions of the battery module and the water cooling plate are kept unchanged by the tray assembly during the heating and curing, the assembly accuracy of the water cooling plate can be significantly improved.

## Description

### FIELD

The present disclosure relates to the field of battery manufacturing technologies, and more particularly, to a heating and curing device and a heating and curing method.

### BACKGROUND

New energy vehicles have advantages of low noise, good driving stability, and zero emission, which are of positive significance for maintaining energy security, preserving the environment, and ensuring sustainable development of society. Therefore, the new energy vehicles are increasingly favored. Further, a battery, as a power source of the new energy vehicle, has become one of the most important components of the new energy vehicle. The battery will generate a lot of heat during charging and discharging. If the heat is not dissipated in time, safety of the battery itself and the automobile, and service life of the battery would be affected.

At present, the battery is mostly using liquid cooling to dissipate heat. A water cooling plate is provided at a bottom of the battery as a component for liquid cooling and heat dissipation. The water cooling plate is usually bonded at the bottom of a battery module by means of a thermosetting adhesive. In the related art, an assembly accuracy of the water cooling plate is low due to the limited bonding process, which results in trouble in later production processes of the battery, and may even cause the battery to be scrapped finally.

### SUMMARY

Based on this, the present disclosure provides a heating and curing device and a heating and curing method, which can improve an assembly accuracy of a water cooling plate of a battery when used in battery manufacturing, thereby improving a yield rate of battery production.

In a first aspect, the present disclosure provides a heating and curing device, including a heating assembly and a tray assembly. The heating assembly includes a support frame and a heat generating plate disposed at the support frame. The tray assembly includes a tray, a first positioning member, and a second positioning member. The tray is configured to carry a battery module and a water cooling plate to be mounted at the battery module. The first positioning member and the second positioning member are both disposed at the tray. The first positioning member is configured to position the water cooling plate, and the second positioning member is configured to position the battery module. The heat generating plate is configured to heat the battery module and the water cooling plate that are carried by the tray assembly.

The heating and curing device according to the embodiment of the present disclosure includes the heating assembly and the tray assembly, and the tray can carry the battery module and the water cooling plate. That is, the battery module and the water cooling plate can be pre-assembled at the tray. Specifically, the water cooling plate can be placed at the tray, and then can be positioned by the first positioning member at the tray. Then, the water cooling plate and/or the bottom of battery module can be coated with an adhesive. Thereafter, the battery module is placed on the tray and is positioned by the second positioning member at the tray. The battery module and the water cooling plate are together transferred to the heating assembly through the tray assembly. In a state where the battery module and the water cooling plate are positioned by the tray assembly, the water cooling plate is heated by the heating assembly to facilitate curing of the adhesive. Therefore, an assembly between the water cooling plate and the battery module can be realized. Since positions of the battery module and the water cooling plate are kept unchanged by the tray assembly during the heating and curing, the assembly accuracy of the water cooling plate can be significantly improved.

In some embodiments, the tray has a hollow region configured to allow the water cooling plate to be brought into contact with the heat generating plate.

Since the tray has the hollow region, when the battery module and the water cooling plate are loaded at the tray, the water cooling plate can be brought in direct contact with the heat generating plate through the hollow region. As a result, the heat emitted from the heat generating plate can be more effectively utilized, and thus waste of heat energy can be avoided.

In some embodiments, the tray assembly includes a plurality of first positioning members arranged on two opposite sides of the hollow region and located close to the hollow region. The tray assembly includes a plurality of second positioning members arranged on other two opposite sides of the hollow region and located close to the hollow region.

By limiting the water cooling plate through the plurality of first positioning members, a positional stability and an attitude stability of the water cooling plate can be improved. Therefore, it is possible to ensure that the water cooling plate will not translate and rotate. By limiting the battery module through the plurality of second positioning members, a positional stability and an attitude stability of the battery module can be improved. Therefore, it is possible to ensure that the battery module will not translate and rotate.

In some embodiments, the tray assembly further includes a plurality of abutting mechanisms disposed at the tray and configured to abut with a side wall of the battery module.

After the battery module is loaded at the tray, the abutting mechanisms tightly abut with the side wall of the battery module. In this way, a gap between the battery module and the tray may be eliminated, which further improves the assembly accuracy of the water cooling plate with the battery module.

In some embodiments, the plurality of abutting mechanisms is distributed on two opposite sides of the hollow region.

When the plurality of abutting mechanisms abuts with the battery module, forces from the abutting mechanisms will be exerted on the two opposite sides of the battery module. Therefore, the battery module will be subject to a uniform force, which is more conducive to maintaining accurate positioning of the battery module.

In some embodiments, each of the plurality of abutting mechanisms includes a mounting block, a guide rail, a slidable abutting block, and an elastic element. The mounting block is fixedly connected to the tray. The guide rail is fixedly connected to the tray. The slidable abutting block is connected to the guide rail in a slidable fit manner, and the elastic element is disposed between the slidable abutting block and the mounting block.

When the battery module is loaded at the tray, the elastic element acts on the slidable abutting block to allow for a movement tendency of the slidable abutting block towards the battery module. In this way, the slidable abutting block can tightly abut with the side wall of the battery module. Moreover, through guiding of the guide rail, a movement direction of the slidable abutting block will not be deviated, which can ensure that the slidable abutting block can effectively provide an abutting effect for the battery module.

In some embodiments, the heating and curing device further includes a tray transfer mechanism configured to transfer the tray assembly to the heating assembly to allow the water cooling plate at the tray assembly to be placed on the heat generating plate.

In the pre-process, the water cooling plate and the battery module may be loaded at the tray assembly separately and adhesive may be coated between the water cooling plate and the battery module, to pre-assembly the water cooling plate and the battery module at the tray assembly. Thereafter, by the tray transfer mechanism, the tray assembly carrying the battery module and the water cooling plate is transferred to a position where the heating assembly is located. Then, the water cooling plate at the tray assembly is placed on the heat generating plate and the battery module and the water cooling plate are heated by using the heat generating plate 120 to facilitate curing of the adhesive. By providing the tray transfer mechanism, it is convenient to transfer the battery module and the water cooling plate between a pre-assembly process position and a heating location.

In some embodiments, the tray transfer mechanism includes a lifting frame and a linear movement cylinder. The lifting frame is configured to drive the tray assembly to lift or lower to allow the water cooling plate at the tray assembly to be placed on the heat generating plate. The linear movement cylinder is disposed at the lifting frame. The linear movement cylinder is configured to pull the tray assembly to move the tray assembly to the lifting frame in a horizontal direction.

In the pre-assembly process position, the battery module and the water cooling plate are loaded at the tray assembly to complete the pre-assembly. Then, the tray assembly may be connected to the linear movement cylinder by means of an external connection rod, and the linear movement cylinder is activated. The linear movement cylinder pulls the tray assembly through the connection rod during its operation, to transfer the tray assembly to the lifting frame from the pre-assembly process position. Then, the connection rod is removed, and then the lifting frame is controlled to be lowered to allow the water cooling plate at the tray assembly to be placed on the heat generating plate. Therefore, it is possible to facilitate the heating and curing process on the water cooling plate.

In some embodiments, the lifting frame has a plurality of first support assemblies provided at a top of the lifting frame. Each of the plurality of first support assemblies is configured to support the tray assembly. The heating and curing device further includes a fixing frame provided with a plurality of second support assemblies. Each of the plurality of second support assemblies is configured to support the tray assembly.

Since the plurality of first support assemblies are provided at the top of the lifting frame, the tray assembly is slidable at the plurality of first support assemblies when the linear movement cylinder pulls the tray assembly to move horizontally. In this way, a friction during the movement of the tray assembly can be reduced, which allow for smooth movement of the tray assembly. The heating and curing device further includes the fixing frame, and the plurality of second support assemblies are provided at the fixing frame. When a tray movement assembly moves to the lifting frame under the pulling of the linear movement cylinder, the lifting frame drives the tray assembly to be lowered. When the lifting frame is lowered until the first support assemblies are flush with the second support assemblies, the tray assembly is supported on both the first support assemblies and the second support assemblies, and the water cooling plate at the tray assembly is just brought into contact with the heat generating plate. Thereafter, the heating and curing process can be performed on the water cooling plate by using the heat generating plate.

In some embodiments, the lifting frame has a plurality of through holes, and the plurality of second support assemblies is arranged to face towards the plurality of through holes in a height direction of the heating and curing device. An inner diameter of each of the plurality of through holes is greater than an outer diameter of each of the plurality of second support assemblies.

During the lowering of the lifting frame, the second support assemblies may be exposed through the through holes of the lifting frame. As the lifting frame continues to be lowered, the first support assemblies and the second support assemblies are finally located at the same level.

Since the plurality of first support assemblies is provided at the top of the lifting frame, the tray assembly is slidable at the first support assemblies when the linear movement cylinder pulls the tray assembly to move horizontally. Therefore, a friction during the movement of the tray assembly can be reduced, which allow for the smooth movement of the tray assembly. The heating and curing device further includes the fixing frame, and the plurality of second support assemblies is provided at the fixing frame. When a tray movement assembly moves to the lifting frame under the pulling of the linear movement cylinder, the lifting frame drives the tray assembly to be lowered. After the lifting frame is lowered to a predetermined level, the second support assemblies are exposed through the through holes of the lifting frame. The lifting frame continues to be lowered until the first support assemblies are flush with the second support assemblies. At this time, the tray assembly is supported on both the first support assemblies and the second support assemblies, and the water cooling plate at the tray assembly is just brought into contact with the heat generating plate. Thereafter, the heating and curing process can be performed on the water cooling plate by using the heat generating plate.

In a second aspect, the present disclosure provides a heating and curing method. The heating and curing method includes: providing a heating assembly and a tray assembly. The heating assembly includes a support frame and a heat generating plate disposed at the support frame. The tray assembly includes a tray, a first positioning member, and a second positioning member. The tray carries a battery module and a water cooling plate to be mounted at the battery module, an adhesive is provided between the battery module and the water cooling plate. The first positioning member and the second positioning member are both disposed at the tray. The first positioning member is configured to position the water cooling plate, and the second positioning member is configured to position the battery module. The heating and curing method further includes: heating and curing the adhesive between the battery module and the water cooling plate using the heat generating plate.

In the heating and curing method according to the embodiment of the present disclosure, the battery module and the water cooling plate can be pre-assembled at the tray. Specifically, the water cooling plate can be placed at the tray, and then can be positioned at the tray by the first positioning member. Then, the water cooling plate and/or the bottom of battery module can be coated with an adhesive. Thereafter, the battery module is placed on the tray and is positioned by the second positioning member at the tray. The battery module and the water cooling plate are together transferred to the heating assembly through the tray assembly. In a state where the battery module and the water cooling plate are positioned by the tray assembly, the water cooling plate is heated by the heating assembly to facilitate curing of the adhesive. Therefore, an assembly between the water cooling plate and the battery module can be realized. Since positions of the battery module and the water cooling plate are kept unchanged by the tray assembly during the heating and curing, the assembly accuracy of the water cooling plate can be significantly improved.

### BRIEF DESCRIPTION OF THE DRAWINGS

Various other advantages and benefits will become clear to those of ordinary skill in the art by reading the detailed description of the following embodiments. The accompanying drawings are only used for the purpose of illustrating the embodiments and are not be considered as limiting the present disclosure. Moreover, in all of the accompanying drawings, the same components are indicated by the same reference numerals. In the accompanying drawings:
FIG. 1 is a schematic structural view of a heating and curing device according to an embodiment of the present disclosure, in which a tray assembly is omitted;
FIG. 2 is a schematic structural view of a tray assembly according to an embodiment of the present disclosure;
FIG. 3 is a schematic partially enlarged view of a structure shown in FIG. 2;
FIG. 4 is a schematic structural view of a heating assembly and a lifting frame according to an embodiment of the present disclosure;
FIG. 5 is a schematic top view of a heating assembly and a lifting frame according to an embodiment of the present disclosure;
FIG. 6 is an enlarged schematic view of part C in FIG. 5;
FIG. 7 is a schematic cross-sectional view in B-B direction in FIG. 5;
FIG. 8 is another schematic structural view of a heating and curing device according to an embodiment of the present disclosure, in which a tray assembly is not shown;
FIG. 9 is a front view of a heating and curing device according to an embodiment of the present disclosure, in which a tray assembly is not shown; and
FIG. 10 is a schematic cross-sectional view in A-A direction in FIG. 9.

### Explanation of reference numerals:

100, heating assembly; 110, support frame; 120, heat generating plate; 200, tray assembly; 210, tray; 211, hollow region; 220, first positioning member; 230, second positioning member; 240, abutting mechanisms; 241, mounting block; 242, guide rail; 244, slidable abutting block; 2441, slidable portion; 2442, abutting portion; 245, elastic element; 300, tray transfer mechanism; 310, lifting frame, 311, first support assembly; 313, power component; 314, liftable structure; 316, through hole; 320, linear movement cylinder; 400, second support assembly; 500 rack.

### DETAILED DESCRIPTION

Embodiments of the technical solutions of the present disclosure will be described in detail below in conjunction with the accompanying drawings. The following embodiments are only used to illustrate the technical solution of the present disclosure more clearly, and therefore are only used as examples, rather than limiting the protection scope of the present disclosure.

Unless otherwise defined, all technical and scientific terms used herein have the same meaning as commonly understood by those skilled in the technical field of the present disclosure; the terms used herein are only for the purpose of describing specific embodiments, and are not intended to limit the present disclosure; the terms "including" and "having", and any variations thereof in the specification and claims of the present disclosure and the description of the above drawings are intended to cover a non-exclusive inclusion.

In the description of the embodiments of the present disclosure, technical terms such as "first" and "second", etc., may be used only herein to distinguish different objects, and should not be understood as indicating or implying relative importance or implicitly indicating the number, specific order, or primary and secondary relationship of the technical features indicated. In the description of the embodiments of the present disclosure, "plurality of" means two or more, unless otherwise specifically limited.

Reference herein to an "embodiment" means that a particular feature, structure, or characteristic described in conjunction with the embodiment may be included in at least one embodiment of the present disclosure. The presence of the phrase in various places in the specification are not necessarily all referring to the same embodiment, nor are separate or alternative embodiments mutually exclusive of other embodiments. It is understood by those skilled in the art, both explicitly and implicitly, that the embodiments described herein may be combined with other embodiments.

In the description of the embodiments of the present disclosure, the term "and/or" is merely a description of an association relationship of the associated objects, indicating that three kinds of relationships may exist, for example, A and/or B, which may be expressed as: the existence of A alone, the existence of A and B at the same time, and the existence of B alone. In addition, the character "/" in this paper generally indicates that the associated objects before and after are in an "or" relationship.

In the description of embodiments of the present disclosure, the term "plurality of" refers to more than two (including two), and similarly, "plurality of groups" refers to more than two groups (including two groups), and "plurality of pieces" refers to more than two pieces (including two pieces).

In the description of embodiments of the present disclosure, technical terms such as "center", "longitudinal", "transverse", "length", "width", "thickness", "over", "below", "front", "back", "left", "right", "vertical", "horizontal", "top", "bottom", "in", "out", "clockwise", "counterclockwise", "axial", "radial", "circumferential", etc., is based on the orientation or position relationship shown in the drawings, and is only for the convenience of describing the embodiments of the present disclosure and simplifying the description, rather than indicating or implying that the device and element referred to must have a specific orientation, or be constructed and operated in a specific orientation, and therefore cannot be understood as a limitation of the embodiment of the present disclosure.

In the description of the embodiments of the present disclosure, unless otherwise clearly specified and limited, technical terms such as "installed", "connected", "connected to", and "fixed" are understood broadly, such as fixed, detachable mountings, connections and couplings or integrated, and may be mechanical or electrical mountings, connections and couplings, and also may be direct and via media indirect mountings, connections, and couplings, and further may be inner mountings, connections and couplings of two components or interaction relations between two components, which can be understood by those skilled in the art according to the detail embodiment of the present disclosure.

At present, from a perspective of a development of a market situation, an application of a power battery is becoming more and more extensive. The power battery is not only used in energy storage power systems such as water power, fire power, wind power, and solar power plants, but also widely used in electric vehicles such as electric bicycles, electric motorcycles, new energy vehicles, as well as military device and aerospace and other fields. With a continuous expansion of an application field of the power battery, its market demand is also constantly expanding.

Taking new energy vehicles as an example, they have attracted more and more people's attention due to their advantages of low noise, good driving stability and zero emission. A battery is a heart of the new energy vehicle and a power source of the new energy vehicle. Safety and service life of the battery is the most concerned issue when users choose the new energy vehicles. The battery will generate a lot of heat during charging and discharging. If the heat is not dissipated in time, safety of the battery itself and the automobile, and service life of the battery would be affected. Therefore, it is particularly important to dissipate heat from the battery. At present, the battery is mostly using liquid cooling to dissipate heat. A water cooling plate is provided at a bottom of the battery as a component for liquid cooling and heat dissipation. The water cooling plate is usually bonded at the bottom of a battery module by means of a thermosetting adhesive.

Typically, a battery includes a plurality of battery cells connected in series or in parallel to form a battery module. In the related art, a thermosetting adhesive is coated between the battery module and a side plate of the battery as well as the battery module and a water cooling plate. First, the adhesive is coated between the battery module and the side plate, and between the battery module and the water cooling plate, and then the battery module, the side plate, and the water cooling plate and the like are transferred to a heating device, and the adhesive is cured by heating, to realize a connection between the battery module and the side plate, and a connection between the battery module and the water cooling plate. Further, the heating device includes a side heating plate and a bottom heating plate. The side heating plate is configured to heat and cure the battery side plate, and the bottom heating plate is configured to heat and cure the water cooling plate at the bottom of the battery.

The inventors of the present disclosure noticed that in a heating and curing process, since the water cooling plate and the battery module are only placed on the bottom heating plate, there may be a positional deviation between the water cooling plate and the battery module, which affects an assembly accuracy of the water cooling plate. The inventor also noticed that before heating the side heating plate of the heating device, the side plate of the battery needs to be pressurized by the side heating plate to ensure that the adhesive between the battery module and the side plate spreads uniformly. The pressurization of the side plate may also lead to positional movement between the battery module and the water cooling plate, further affecting the assembly accuracy of the water cooling plate.

It can be understood that low assembly accuracy of the water cooling plate may cause great trouble to later production processes of the battery. For example, after the battery is purchased by an automobile manufacturer, the battery will be further equipped with a liquid inlet pipe and a liquid outlet pipe for supplying refrigerant to the water cooling plate. The liquid inlet pipe and the liquid outlet pipe will first be connected to ports formed in the water cooling plate by press-fitting, and then are connected to the ports. When the assembly accuracy of the water cooling plate in the battery is low, the position deviation of the liquid inlet pipe and the liquid outlet pipe after press-fitting will occur, and thus the liquid inlet pipe and the liquid outlet pipe cannot be connected to the ports formed in the water cooling plate. When the positional deviation is large, a weak part of the water cooling plate in structure may be pressed, which may damage the water cooling plate. Once the damaged water cooling plate is put into use, there will be a risk that the refrigerant leaks into the battery module, resulting in the scrapping of the battery module.

Based on the above-mentioned problems, in order to improve the assembly accuracy of the water cooling plate, the inventor has designed a heating and curing device through in-depth research. With the heating and curing device, the battery module and the water cooling plate can be pre-assembled by means of a tray assembly when manufacturing the battery. Further, in a state where the battery module and the water cooling plate are positioned by the tray assembly, the water cooling plate can be heated and cured. Therefore, an assembly of the water cooling plate can be realized. Since the positioning of the battery module and the water cooling plate is maintained by the tray assembly during the heating and curing process, the assembly accuracy of the water cooling plate can be significantly improved.

Based on the above-mentioned heating and curing device, the present disclosure further proposes a heating and curing method, which can improve an assembly accuracy of the water cooling plate.

The heating and curing device proposed in the present disclosure may be used for, but is not limited to, heating and curing the water cooling plate of the battery.

The battery disclosed in the embodiments of the present disclosure may be used in, but is not limited to, electric devices such as vehicles, ships, or aircraft.

The battery mentioned in the embodiments of the present disclosure refers to a single physical module including one or more battery cells to provide higher voltage and capacity. A plurality of battery cells may be connected in series and/or in parallel by welding electrode poles and conductive connection members, to be applied in various disclosures. In some high-power applications such as electric vehicles, an application of the battery includes three levels: a battery cell, a battery module, and a battery pack. The battery module is formed by electrically connecting a predetermined number of battery cells together and loading them into a frame in order to protect the battery cells from external shock, heat, vibration, and the like. The battery pack is a final component loaded in the battery system of the electric vehicle. Most of the current battery packs are constructed by assembling various control and protection systems such as a battery management system (BMS) and thermal management components on one or more battery modules. With the development of technology, the level of the battery module may be removed. That is, the battery pack is formed directly from the battery cells. Such an improvement has improved the gravimetric energy density and volumetric energy density of the battery system while significantly reducing the number of the parts and components. The battery as described in the present disclosure includes a battery module or a battery pack.

In the battery, a plurality of battery cells may be connected in series, parallel, or is hybrid connection. The hybrid connection refers to the plurality of battery cells in both series and parallel connection. The plurality of battery cells may be directly connected in series or parallel, or in hybrid connection, and then the plurality of battery cells is contained in a casing as a whole. Of course, the plurality of battery cells is first connected in series or parallel, or in hybrid connection to form the battery module, and a plurality of battery modules then connected in series or parallel, or in hybrid connection and is contained in the casing as a whole. The battery may also have other structures. For example, the battery may also include a current collector configured for electrical connections among the plurality of battery cells. Further, each battery cell may be a secondary battery or a primary battery. The battery cell may also be a lithium-sulfur battery, a sodium-ion battery, or a magnesium-ion battery, and the present disclosure is not limited thereto. The battery cell may be cylindrical, flat, rectangular, or other shapes.

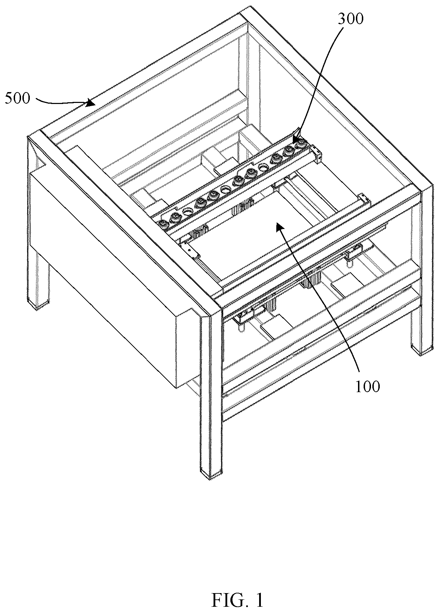

As is illustrated in FIG. 1 to FIG. 4, an embodiment of a first aspect of the present disclosure provides a heating and curing device. The heating and curing device includes a heating assembly 100 and a tray assembly 200. Specifically, the heating assembly 100 includes a support frame 110 and a heat generating plate 120 disposed at the support frame 110. The tray assembly 200 includes a tray 210, a first positioning member 220, and a second positioning member 230. The tray 210 is configured to carry a battery module and a water cooling plate to be mounted at the battery module. The first positioning member 220 and the second positioning member 230 are both disposed at the tray 210. The first positioning member 220 is configured to position the water cooling plate, and the second positioning member 230 is configured to position the battery module. Further, the heat generating plate 120 is configured to heat the battery module and the water cooling plate that are carried by the tray assembly 200.

The heating assembly 100 refers to a structure capable of generating a high temperature to heat an object to be heated. A heat generated by the heating assembly 100 during operation may be transferred to the battery module and the water cooling plate, to facilitate curing of an adhesive coated between the battery module and the water cooling plate.

The heat generating plate 120 is a plate-like component that directly generates a high temperature in the heating assembly 100. Specifically, the heat generating plate 120 may be an electrical heating plate that converts electrical energy into heat, or an electromagnetic heating plate that converts electromagnetic energy into heat.

The support frame 110 is a frame disposed at the bottom of the heat generating plate 120 and configured to support the heat generating plate 120. Since the support frame 110 has a predetermined height, the heat generating plate 120 may be at a proper height. In addition, the support frame 110 is further configured to allow the heating assembly 100 to have predetermined structural strength and structural rigidity. In this way, the heating assembly 100 can carry a predetermined weight, which in turn prevents the structure of the heating assembly 100 from being damaged or deformed when the battery module and the water cooling plate are placed on the heat generating plate. Therefore, a structural stability can always be maintained. The support frame 110 may be made of a rigid metal piece, which is not only stable, but also strong and durable.

The tray assembly 200 refers to a component that can carry the battery module and the water cooling plate for circulation in different processes. Further, the tray 210 is a main structure of the tray assembly 200, and a weight of each of the battery module and the water cooling plate is mainly carried by the tray 210.

The first positioning member 220 refers to a structural member that is mounted at the tray 210 and can limit the water cooling plate. After the water cooling plate is loaded at the tray 210, the first positioning member 220 can maintain the water cooling plate in a fixed position on the tray 210 without movement. For example, exemplarily, the first positioning member 220 may be a positioning post, a positioning pin, or a positioning block.

The second positioning member 230 refers to a structural member that is mounted at the tray 210 and can limit the battery module. After the battery module is loaded at the tray 210, the second positioning member 230 can maintain the battery module in a fixed position on the tray 210 without movement. For example, exemplarily, the second positioning member 230 may be a positioning post, a positioning pin, or a positioning block.

The heating and curing device according to the embodiment of the present disclosure includes the heating assembly 100 and the tray assembly 200, and the tray 210 can carry the battery module and the water cooling plate. That is, the battery module and the water cooling plate can be pre-assembled at the tray 210. Specifically, the water cooling plate can be placed at the tray 210, and then can be positioned by the first positioning member 220 at the tray 210. Then, the water cooling plate and/or the bottom of battery module can be coated with an adhesive. Thereafter, the battery module is placed at the tray 210 and is positioned by the second positioning member 230 at the tray 210. The battery module and the water cooling plate are together transferred to the heating assembly 100 through the tray assembly 200. In a state where the battery module and the water cooling plate are positioned by the tray assembly 200, the water cooling plate is heated by the heating assembly 100 to facilitate curing of the adhesive. Therefore, an assembly between the water cooling plate and the battery module can be realized. Since positions of the battery module and the water cooling plate are kept unchanged by the tray assembly 200 during the heating and curing, the assembly accuracy of the water cooling plate can be significantly improved.

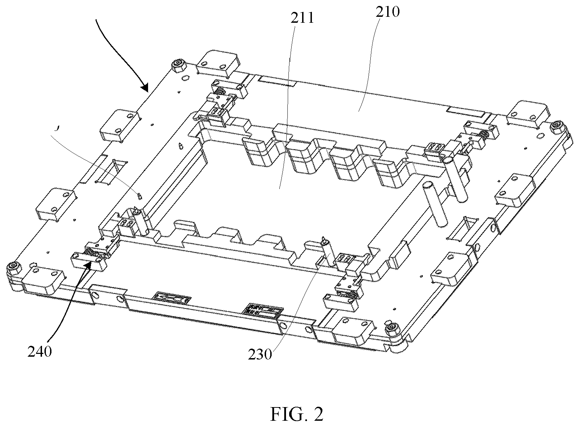

In some embodiments, as is illustrated in FIG. 2, the tray 210 has a hollow region 211 configured to allow the water cooling plate to be brought into contact with the heat generating plate 120.

The hollow region 211 is a hole and slot structure formed at the tray 210.

Since the tray 210 has the hollow region 211, when the battery module and the water cooling plate are loaded at the tray 210, the water cooling plate can be in direct contact with the heat generating plate 120 through the hollow region 211. As a result, the heat emitted from the heat generating plate 120 can be more effectively utilized, and waste of heat energy can be avoided.

In some embodiments, the tray assembly includes a plurality of first positioning members 220. The plurality of first positioning members 220 is arranged on two opposite sides of the hollow region 211 and are located close to the hollow region 211. Further, the tray assembly includes a plurality of second positioning members 230. The plurality of second positioning members 230 is arranged on other two opposite sides of the hollow region 211 and are located close to the hollow region 211.

In this embodiment, the plurality of first positioning members 220 is provided. By limiting the water cooling plate through the plurality of first positioning members 220, a positional stability and an attitude stability of the water cooling plate can be improved. Therefore, it is possible to ensure that the water cooling plate will not translate and rotate. Similarly, the plurality of second positioning members 230 is provided. By limiting the battery module through the plurality of second positioning members 230, a positional stability and an attitude stability of the battery module can be improved. Therefore, it is possible to ensure that the battery module will not translate and rotate. In addition, the plurality of first positioning members 220 is arranged on two opposite sides of the hollow region 211, and the plurality of second positioning members 230 is arranged on other two opposite sides of the hollow region. The first positioning members 220 and the second positioning members 230 will not interfere with each other.

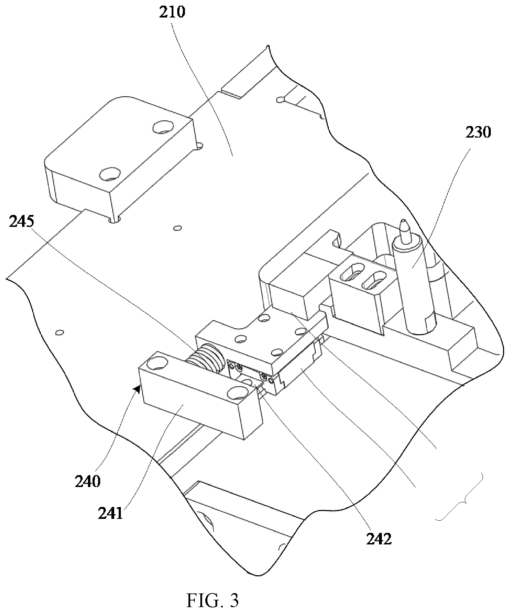

In some embodiments, as is illustrated in FIG. 2 and FIG. 3, the tray assembly 200 further includes a plurality of abutting mechanisms 240. The abutting mechanisms 240 is disposed at the tray 210 and is configured to abut with a side wall of the battery module to fix the battery module at the tray 210.

The abutting mechanisms 240 refers to an elastic and extendable mechanism that usually has an extendable end. Under an action of elasticity, the extendable end can be tightly abut with the side wall of the battery module.

It can be understood that, corresponding to the first positioning member 220 and the second positioning member 230, a positioning hole for engaging with the first positioning member 220 is formed at the water cooling plate, and a positioning hole for engaging with the second positioning member 230 is formed at the battery module. Although the battery module can be positioned at the tray 210 through the engagement of the positioning hole with the second positioning member 230, there may still be a gap between the battery module and the tray 210. The abutting mechanisms 240 are provided for eliminating the above-mentioned gap. Specifically, after the battery module is loaded at the tray 210, the abutting mechanisms 240 tightly abut with the side wall of the battery module. In this way, a gap between the battery module and the tray can be eliminated, and the battery module can be fixed on the tray 210, thereby further improving the assembly accuracy of the water cooling plate and the battery module.

In some embodiments, the plurality of abutting mechanisms 240 is provided. The plurality of abutting mechanisms 240 is arranged on two opposite sides of the hollow region 211. With such an arrangement, when the plurality of abutting mechanisms abuts with the battery module, force from the abutting mechanisms will be exerted on two opposite sides of the battery module. As a result, the battery module is subject to a uniform force, which is more conducive to maintaining accurate positioning of the battery module.

It can be understood that the battery module typically has a rectangular structure having four side surfaces, two of which are large side surfaces and the other two of which are small side surfaces. In one embodiment, the plurality of abutting mechanisms 240 is arranged on two opposite sides of the large side surfaces. Certainly, in another embodiment, the plurality of abutting mechanisms 240 may also be arranged on two opposite sides of the small side surfaces.

In some embodiments, as is illustrated in FIG. 3, each of the plurality of abutting mechanisms 240 includes a mounting block 241, a guide rail 242, a slidable abutting block 244, and an elastic element 245. Further, the mounting block 241 is fixedly connected to the tray 210, and the guide rail 242 is fixedly connected to the tray 210. Furthermore, the slidable abutting block 244 is connected to the guide rail 242 in a slidable fit manner, and the elastic element 245 is disposed between the slidable abutting block 244 and the mounting block 241.

The mounting block 241 refers to a rigid structural body fixedly disposed at the tray 210 to ensure a reliability of a connection between the abutting mechanisms 240 and the tray 210.

The slidable abutting block 244 refers to a structural member that may be in direct contact with the side wall of the battery module to exert a pressure to the battery module.

The guide rail 242, which may also be referred to as a slide rail or a track, refers to a structure provided at the tray 210 for defining a movement trajectory of the slidable abutting block 244. The slidable abutting block 244 in the embodiments of the present disclosure can realize a linear reciprocating movement. Exemplarily, the slidable abutting block 244 may further include a slidable portion 2441 and an abutting portion 2442. The abutting portion 2442 is a part of the slidable abutting block 244 in direct contact with the side wall of the battery module. The slidable portion 2441 is a part that is slidably engaged with the guide rail 242.

The elastic element 245 can provide an elastic force to the slidable abutting block 244 to allow for a movement tendency of the slidable abutting block 244 towards the battery module. As an embodiment, the elastic element 245 may be, for example, a spring.

When the battery module is loaded at the tray 210, the elastic element 245 acts on the slidable abutting block 244, to allow the slidable abutting block 244 to maintain a movement tendency towards the battery module. In this way, the slidable abutting block 244 tightly abuts with the side wall of the battery module. Moreover, under guiding of the guide rail 242, a movement direction of the slidable abutting block 244 will not deviate, thereby ensuring that the slidable abutting block 244 can effectively provide an abutting effect for the battery module.

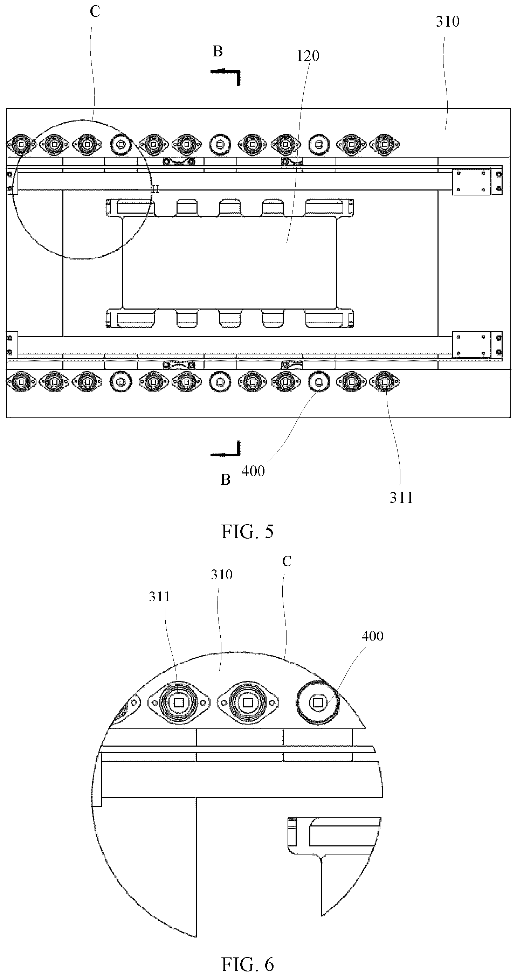

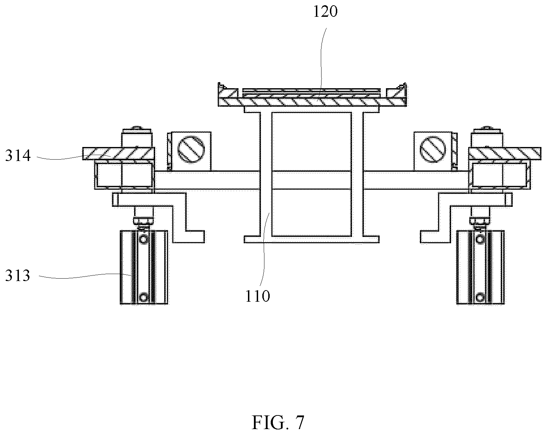

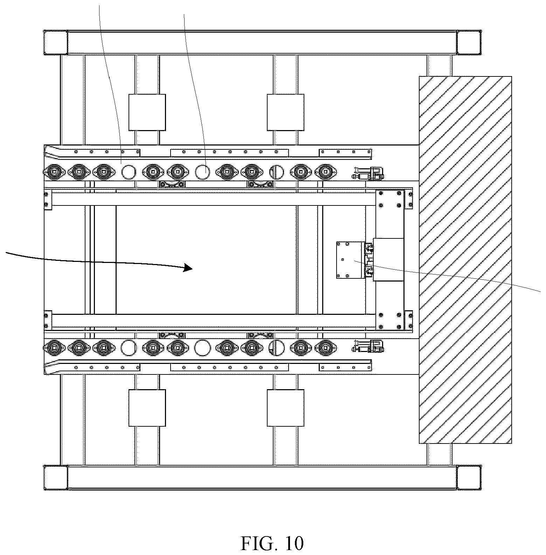

In some embodiments, as is illustrated in FIG. 1, FIG. 4, and FIG. 5 to FIG. 10, the heating and curing device further including a tray transfer mechanism 300. The tray transfer mechanism 300 is configured to transfer the tray assembly 200 to the heating assembly 100 to allow the water cooling plate at the tray assembly 200 to be placed on the heat generating plate 120.

The tray transfer mechanism 300 is a mechanism capable of driving the tray assembly 200 to move to allow the tray assembly 200 to be transferred between different processing stations.

In the pre-process, the water cooling plate and the battery module may be loaded at the tray assembly 200 separately, and an adhesive may be coated between the water cooling plate and the battery module. In this way, the water cooling plate and the battery module can be pre-assembled at the tray assembly 200. Thereafter, the tray assembly 200 carrying the battery module and the water cooling plate is transferred to a position where the heating assembly 100 is located by using the tray transfer mechanism 300. Then, the water cooling plate at the tray assembly 200 is placed on the heat generating plate 120, and the battery module and the water cooling plate are heated by using the heat generating plate 120 to facilitate curing of the adhesive. By providing the tray transfer mechanism 300, it is convenient to transfer the battery module and the water cooling plate between a pre-assembly process position and a heating position.

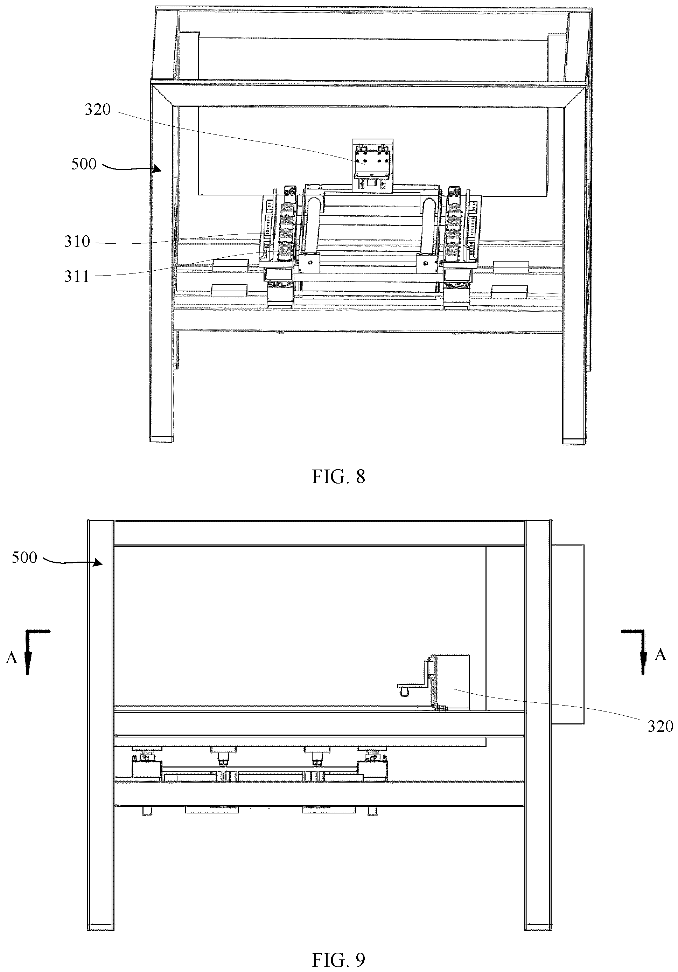

In some embodiments, as illustrated in FIG. 8 to FIG. 10, the tray transfer mechanism 300 includes a lifting frame 310 and a linear movement cylinder 320. The lifting frame 310 is configured to drive the tray assembly 200 to lift or lower to allow the water cooling plate at the tray assembly 200 to be placed on the heat generating plate 120. The linear movement cylinder 320 is disposed at the lifting frame 310. The linear movement cylinder 320 is configured to pull the tray assembly 200 to move the tray assembly 200 to the lifting frame 310 in a horizontal direction.

The lifting frame 310 is a frame having lifting and lowering functions. It can be understood that the lifting frame 310 includes a power component 313 and a liftable structure 314. The power component 313 may be a power device such as an air cylinder, a hydraulic cylinder, or a linear motor for providing linear movement. The liftable structure 314 is connected to a moving end of the power component. In this way, the liftable structure 314 can be lifted or lowered under driving of the power component 313.

The linear movement cylinder 320 refers to a power cylinder for providing linear movement. The linear movement cylinder 320 may be an air cylinder, a hydraulic cylinder, and the like. The linear movement cylinder 320 may be classified into a rodless movement cylinder and a rod movement cylinder based on whether the linear movement cylinder 320 has a push-pull rod that can output a linear movement. Specifically, the rodless movement cylinder does not has the push-pull rod that can output the linear movement, while the rod movement cylinder has the push-pull rod that can output the linear movement.

In the pre-assembly process position, the battery module and the water cooling plate are loaded at the tray assembly 200 to complete the pre-assembly. Then, the tray assembly 200 can be connected to the linear movement cylinder 320 by means of an external connection rod, and then the linear movement cylinder 320 is activated. The linear movement cylinder 320 pulls the tray assembly 200 through the connection rod during operation, to transfer the tray assembly 200 to the lifting frame 310 from the pre-assembly process position. Next, the connection rod I removed, and then the lifting frame 310 is controlled to be lowered, to allow the water cooling plate at the tray assembly 200 to be placed on the heat generating plate 120. In this way, it is possible to facilitate performing the heating and curing process on the water cooling plate.

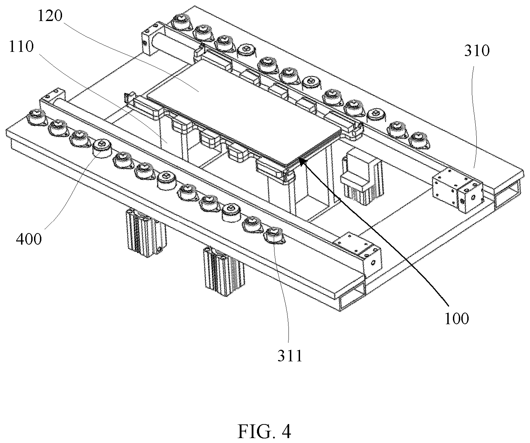

In some embodiments, as is illustrated in FIG. 4 to FIG. 6, FIG. 9, and FIG. 10, the lifting frame 310 has a plurality of first support assemblies 311 provided at a top of the lifting frame 310. Each of the plurality of first support assemblies 311 is configured to support the tray assembly 200. The heating and curing device further includes a fixing frame provided with a plurality of second support assemblies 400. Each of the plurality of second support assemblies 400 is configured to support the tray assembly 200. A height of the fixing frame may be set such that when the tray assembly 200 is lowered onto a second universal bearing, the water cooling plate at the tray assembly 200 is just brought into contact with the heat plate 120.

A support assembly is a mechanical structure that utilizes a ball connection to achieve power transmission among different shafts. For example, the support assembly may be a universal bearing.

The fixing frame is a frame having constant height.

In this embodiment, a plurality of first support assemblies 311 are provided at the top of the lifting frame 310. The tray assembly 200 is slidable at the first support assemblies 311 when the linear movement cylinder 320 pulls the tray assembly 200 to move horizontally. In this way, a friction during the movement of the tray assembly 200 can be reduced, to allow for a smooth movement of the tray assembly 200.

The heating and curing device further includes a fixing frame, and a plurality of second support assemblies 400 are provided at the fixing frame. When a tray 210 movement assembly moves to the lifting frame 310 under the pulling of the linear movement cylinder 320, the lifting frame 310 drives the tray assembly 200 to be lowered. When the lifting frame 310 is lowered until the first support assemblies 311 are flush with the second support assemblies 400, the tray assembly 200 is supported on both the first support assemblies 311 and the second support assemblies 400. At this time, the water cooling plate at the tray assembly 200 is just brought into contact with the heat generating plate 120. Thereafter, the heating and curing process can be performed on the water cooling plate by using the heat generating plate 120.

In some embodiments, the lifting frame 310 has a plurality of through holes 316. The plurality of second support assemblies 400 is arranged to face towards the plurality of through holes 316 in a height direction of the heating and curing device, and an inner diameter of each of the plurality of through holes is greater than an outer diameter of each of the plurality of second support assemblies 400.

During the lowering of the lifting frame 310, the second support assemblies 400 is exposed through the through holes of the lifting frame 310. As the lifting frame 310 continues to be lowered, the first support assembly 311 and the second support assembly 400 are finally flush with each other.

In some embodiments, as is illustrated in FIG. 1 and FIG. 8, the heating and curing device further includes a rack 500. The heating assembly 100, the lifting frame 310, the fixing frame, and the like are all provided on the rack 500. With such an arrangement, each component of the heating and curing device can be integrated together.

In some embodiments, the heating and curing device includes a heating assembly 100 and a tray assembly 200. The heating assembly 100 includes a support frame 110 and a heat generating plate 120 disposed at the support frame 110. The tray assembly 200 includes a tray 210, a first positioning member 220, and a second positioning member 230. The tray 210 is configured to carry a battery module and a water cooling plate to be mounted at the battery module. The first positioning member 220 and the second positioning member 230 are both disposed at the tray 210. The first positioning member 220 is configured to position the water cooling plate, and the second positioning member 230 is configured to position the battery module. The tray 210 has a hollow region 211 configured to allow the water cooling plate to be brought into contact with the heat generating plate 120. The heating and curing device further includes a tray transfer mechanism 300. The tray transfer mechanism 300 is configured to transfer the tray assembly 200 to the heating assembly 100 to allow the water cooling plate at the tray assembly 200 to be placed on the heat generating plate 120. The tray transfer mechanism 300 includes a lifting frame 310 and a linear movement cylinder 320. The lifting frame 310 is configured to drive the tray assembly 200 to lift or lower to allow the water cooling plate at the tray assembly 200 to be placed on the heat generating plate 120. The linear movement cylinder 320 is disposed at the lifting frame 310. The linear movement cylinder 320 is configured to pull the tray assembly 200 to move the tray assembly 200 to the lifting frame 310 in a horizontal direction.

The heating and curing device according to the embodiment of the present disclosure includes the heating assembly 100 and the tray assembly 200, and the tray 210 can carry the battery module and the water cooling plate. That is, the battery module and the water cooling plate can be pre-assembled at the tray 210. Specifically, the water cooling plate can be placed at the tray 210, and then can be positioned by the first positioning member 220 at the tray 210. Then, the water cooling plate and/or the bottom of battery module can be coated with an adhesive. Thereafter, the battery module is placed at the tray 210 and is positioned by the second positioning member 230 at the tray 210. The battery module and the water cooling plate are together transferred to the heating assembly 100 through the tray assembly 200. In a state where the battery module and the water cooling plate are positioned by the tray assembly 200, the water cooling plate is heated by the heating assembly 100 to facilitate curing of the adhesive. Therefore, an assembly between the water cooling plate and the battery module can be realized. Since positions of the battery module and the water cooling plate are kept unchanged by the tray assembly 200 during the heating and curing, the assembly accuracy of the water cooling plate can be significantly improved.

In addition, since the tray 210 has the hollow region 211, when the battery module and the water cooling plate are loaded at the tray 210, the water cooling plate can be in direct contact with the heat generating plate 120 through the hollow region 211. As a result, the heat emitted from the heat generating plate 120 can be more effectively utilized, and waste of heat energy can be avoided.

Furthermore, in the pre-process, the water cooling plate and the battery module may be loaded at the tray assembly 200 separately, and the adhesive can be coated between the water cooling plate and the battery module, to pre-assembly the water cooling plate and the battery module at the tray assembly 200. Thereafter, the tray assembly 200 carrying the battery module and the water cooling plate is transferred to a position where the heating assembly 100 is located by using the tray transfer mechanism 300. Then, the water cooling plate at the tray assembly 200 is placed on the heat generating plate 120, and the battery module and the water cooling plate are heated by using the heat generating plate 120 to facilitate curing of the adhesive. By providing the tray transfer mechanism 300, it is convenient to transfer the battery module and the water cooling plate between a pre-assembly process position and a heating position.

An embodiment of a second aspect of the present disclosure proposes a heating and curing method. The heating and curing method includes providing a heating assembly 100 and a tray assembly 200. The heating assembly 100 includes a support frame 110 and a heat generating plate 120 disposed at the support frame 110. The tray assembly 200 includes a tray 210, a first positioning member 220, and a second positioning member 230. The tray 210 carries a battery module and a water cooling plate to be mounted at the battery module. An adhesive is provided between the battery module and the water cooling plate. The first positioning member 220 and the second positioning member 230 are both disposed at the tray 210. The first positioning member 220 is configured to position the water cooling plate, and the second positioning member 230 is configured to position the battery module. The heating and curing method further includes heating and curing the adhesive between the battery module and the water cooling plate using the heat generating plate 120.

In the heating and curing method according to the embodiment of the present disclosure, the battery module and the water cooling plate can be pre-assembled on the tray 210. Specifically, the water cooling plate can be placed at the tray 210, and then can be positioned by the first positioning member 220 at the tray 210. Then, the water cooling plate and/or the bottom of battery module can be coated with an adhesive. Thereafter, the battery module is placed at the tray 210 and is positioned by the second positioning member 230 at the tray 210. The battery module and the water cooling plate are together transferred to the heating assembly 100 through the tray assembly 200. In a state where the battery module and the water cooling plate are positioned by the tray assembly 200, the water cooling plate is heated by the heating assembly 100 to facilitate curing of the adhesive. Therefore, an assembly between the water cooling plate and the battery module can be realized. Since positions of the battery module and the water cooling plate are kept unchanged by the tray assembly 200 during the heating and curing, the assembly accuracy of the water cooling plate can be significantly improved.

Finally, it should be noted that the above embodiments are only used to illustrate the technical solutions of the present disclosure, and are not intended to limit the present disclosure. Although the present disclosure has been described in detail with reference to the foregoing embodiments, those of ordinary skill in the art should understand that it is still possible to modify the technical solutions described in the foregoing embodiments, or perform equivalent replacements for some or all of the technical features, and these modifications or replacements do not make the essence of the corresponding technical solutions deviate from the technical solutions of the various embodiments of the present disclosure. All of them should fall within the scope of the claims and description of the present disclosure. In particular, as long as there is no structural conflict, the technical features mentioned in the various embodiments may be combined in any manner. The present disclosure is not limited to the specific embodiments disclosed herein, and may include all technical solutions falling within the scope of the claims.

## Claims

1. A heating and curing device, comprising:
a heating assembly comprising a support frame and a heat generating plate disposed at the support frame; and
a tray assembly comprising:
a tray configured to carry a battery module and a water cooling plate to be mounted at the battery module; and
a first positioning member and a second positioning member that are both disposed at the tray, the first positioning member being configured to position the water cooling plate, and the second positioning member being configured to position the battery module,
wherein the heat generating plate is configured to heat the battery module and the water cooling plate that are carried by the tray assembly.

2. The heating and curing device according to claim 1, wherein the tray has a hollow region configured to allow the water cooling plate to be brought into contact with the heat generating plate.

3. The heating and curing device according to claim 2, wherein:
the tray assembly comprises a plurality of first positioning members arranged on two opposite sides of the hollow region and located close to the hollow region; and
the tray assembly comprises a plurality of second positioning members arranged on other two opposite sides of the hollow region and located close to the hollow region.

4. The heating and curing device according to claim 2, wherein the tray assembly further comprises a plurality of abutting mechanisms disposed at the tray and configured to abut with a side wall of the battery module.

5. The heating and curing device according to claim 4, wherein the plurality of abutting mechanisms is distributed on two opposite sides of the hollow region.

6. The heating and curing device according to claim 5, wherein each of the plurality of abutting mechanisms comprises:
a mounting block fixedly connected to the tray;
a guide rail fixedly connected to the tray;
a slidable abutting block connected to the guide rail in a slidable fit manner;
an elastic element disposed between the slidable abutting block and the mounting block.

7. The heating and curing device according to claim 1, further comprising a tray transfer mechanism configured to transfer the tray assembly to the heating assembly to allow the water cooling plate at the tray assembly to be placed on the heat generating plate.

8. The heating and curing device according to claim 7, wherein the tray transfer mechanism comprises:
a lifting frame configured to drive the tray assembly to lift or lower to allow the water cooling plate at the tray assembly to be placed on the heat generating plate;
a linear movement cylinder disposed at the lifting frame, the linear movement cylinder being configured to pull the tray assembly to move the tray assembly to the lifting frame in a horizontal direction.

9. The heating and curing device according to claim 8, wherein:
the lifting frame has a plurality of first support assemblies provided at a top of the lifting frame, each of the plurality of first support assemblies being configured to support the tray assembly; and
the heating and curing device further comprises a fixing frame provided with a plurality of second support assemblies, each of the plurality of second support assemblies being configured to support the tray assembly.

10. The heating and curing device according to claim 9, wherein the lifting frame has a plurality of through holes, the plurality of second support assemblies being arranged to face towards the plurality of through holes in a height direction of the heating and curing device, and an inner diameter of each of the plurality of through holes being greater than an outer diameter of each of the plurality of second support assemblies.

11. A heating and curing method, comprising:
providing a heating assembly and a tray assembly, wherein the heating assembly comprises a support frame and a heat generating plate disposed at the support frame, the tray assembly comprising a tray, a first positioning member, and a second positioning member, the tray carrying a battery module and a water cooling plate to be mounted at the battery module, an adhesive being provided between the battery module and the water cooling plate, the first positioning member and the second positioning member being both disposed at the tray, the first positioning member being configured to position the water cooling plate, and the second positioning member being configured to position the battery module; and
heating and curing the adhesive between the battery module and the water cooling plate using the heat generating plate.
